# EUROPÄISCHE PATENTSCHRIFT

(11) **EP 0 349 752 B1**
(45) Veröffentlichungstag und Bekanntmachung des Hinweises auf die Patenterteilung: **03.03.1993**
(21) Anmeldenummer: 89109567.1
(22) Anmeldetag: 26.05.1989
(51) Int. Cl.: E02D 29/14, E03F 5/06

(54) **Abdeckung für eine Bodenöffnung mit einem Deckel oder Rost**
Covering of a manhole by means of a lid or a grating
Couverture d'un regard par un couvercle ou une grille

(30) Priorität: 05.07.1988 CH 2546/88
(43) Veröffentlichungstag der Anmeldung: 10.01.1990
(73) Patentinhaber: VON ROLL AG, 4563 Gerlafingen (CH)
(72) Erfinder: Spiess, Hansruedi, CH-2800 Delémont (CH); Galvanetto, François, CH-2942 Alle (CH)
(74) Vertreter: EGLI-EUROPEAN PATENT ATTORNEYS

(56) Entgegenhaltungen:
- EP-A- 0 084 510
- FR-A- 2 453 944
- US-A- 2 997 932
- US-A- 3 130 651

## Beschreibung

Die Erfindung betrifft eine Abdeckung für eine Bodenöffnung mit einem Rahmen und einem die Oeffnung verschliessenden, abnehmbaren Deckel oder Rost gemäss dem dem Oberbegriff des Anspruchs 1.

Aus der EP-A-0 084 510 ist eine gattungsgemässe Abdeckung bekannt, welche einen Deckel mit einer Scharniervorrichtung mit einem Schwenkzapfen zeigt, der in der Schliesslage die in der Offenlage in einer schlitzförmigen Ausnehmung des Haltestegs liegt.

Das hat verschiedene Nachteile. Erstens ist die Herstellung des Rahmens wegen des Zapfens verhältnismässig kompliziert und der Rahmen ist verletzbar, da der Zapfen leicht abgebrochen werden kann. Zweitens ist das Aufsetzen des Deckels nur in einem engen Bereich des Winkels zwischen Deckel und Rahmen möglich und drittens hat der Deckel in Richtungen quer zum Zapfen nur geringes Spiel, sodass etwa eine Verriegelung durch Verschiebung des Deckels in der Rahmenebene nicht möglich ist und der Zapfen selber als Verriegelung gegen ein Abheben des Deckels dienen muss, was wegen seiner Verletzlichkeit und geringen Stärke ungünstig ist.

Aus der FR-A-2 453 944 ist eine Abdeckung bekannt, bei welcher der Deckel aus zwei Deckelhälften besteht, deren jede einen Fortsatz aufweist, welcher in eine an der Innenseite des Rahmens unterhalb des oberen Randes desselben angebrachte Ausnehmung eingeführt werden kann sowie davon beabstandet Nocken mit schrägen Abstützflächen, welche bei Einnahme der Schliesslage derart mit entsprechenden Auflageflächen am Rahmen in Kontakt kommen, dass die Deckelhälfte gegen die Ausnehmung gedrückt wird.

Die Abdeckung kommt zwar ohne Schwenkzapfen aus, aber eine stabile Offenlage der Deckelhälften ist offensichtlich nicht möglich. Beim Abdecken der Oeffnung müssen dieselben vollständig entfernt werden. Auch das Aufsetzen ist eher unbequem, da sie in eine der Schliesslage nahe Winkellage gebracht werden müssen, worauf dann jeweils in dieser unbequemen Position der Verriegelungszapfen in die entsprechende Oeffnung im Rahmen eingeführt werden muss.

Bei einer Weiteren bekannten Ausführungsform (FR-A-2 548 254) ist in einer von drei Seiten geschlossenen Ausnehmung ein Einsatzstück eingesetzt, in welchem zwei gebogene Führungschlitze ausgespart sind, in die ein am Deckel angeformter Haltesteg einführbar ist.

Hierzu sind am freien Ende des Haltesteges zwei kreisrunde Zapfen angeformt, welche die Drehachse des Deckels bilden und in die Führungsschlitze ragen. Damit das Einsatzstück nicht beim Oeffnen des Deckels aus der Ausnehmung rutschen kann, sind Haltenasen am Einsatzstück vorgesehen, die unter elastischer Verformung des Einsatzstückes in eine Vertiefung in der Ausnehmung einrasten. Damit jedoch eine zuverlässige Halterung erreicht wird, ist eine verhältnismässig grosse Genauigkeit der Dimensionen des Einsatzstückes und der Haltenasen sowie der Vertiefungen in der Ausnehmung des Rahmens erforderlich, die bei der üblichen Herstellung der Abdeckungen durch Giessen nur mit zusätzlichem Aufwand erreichbar ist. Bei einer weiteren bekannten Ausführungsform (US-A-3 130 651) ist ein rechteckiger Deckel in einem rechteckigen Rahmen eingesetzt, wobei am Deckelrand ein Haltesteg angeformt ist, der beidseits mit einem kreisrunden Schwenkzapfen versehen ist. Die Schwenkzapfen werden in Führungsnuten eingeführt, die an den Seiten einer Ausnehmung im Rahmen der Abdeckung ausgespart sind. Die Schwenkzapfen bilden in den Führungsnuten eine Schwenkachse, um die der Deckel geschwenkt werden kann. Die Schwenkzapfen können jedoch verhältnismässig leicht aus den Führungsnuten schlüpfen, wenn der Deckel durch den darüberrollenden Verkehr elastisch verformt wird. Dasselbe gilt auch für eine fünfte Ausführungsform (GB-A-474 250). Bei dieser Ausführungsform ist der Deckel dreieckförmig und die Führungszapfen sind an den Enden einer Dreieckseite angeordnet. Dementsprechend sind auch im Rahmen zwei Ausnehmungen vorgesehen, in welchen je eine Führungsnut zur Aufnahme eines Schwenkzapfens ausgespart ist.

Auch die drei zuletzt genannten Ausführungsformen weisen Schwenkzapfen auf und haben daher die schon weiter oben aufgeführten Nachteile.

Demgegenüber ist es Aufgabe der Erfindung, eine Abdeckung zu schaffen, bei welcher der Deckel oder Rost sehr leicht - praktisch durch einfaches Auflegen - montiert werden kann und der Rahmen leicht herstellbar ist und keine schwachen abstehenden Teile aufweist, die leicht abbrechen können. Zudem soll der Deckel in der Schliesslage im Bereich der Scharniervorrichtung automatisch verriegelt und in der Offenlage stabilisiert sein.

Diese Aufgabe wird durch die Merkmale im Kennzeichen des Anspruchs 1 gelöst.

Die Erfindung ist in einem Ausführungsbeispiel dargestellt und nachfolgend beschrieben. Es zeigen:
- Fig. 1: eine Draufsicht eines im wesentlichen kreisförmigen Rahmens zum Einsetzen von zwei halbkreisförmigen Deckeln,
- Fig. 2: einen Schnitt längs der Linie II - II in Fig. 1 in vergrösserter Darstellung,
- Fig. 3: eine Ansicht der Innenseite des Rahmens aus Richtung III III in Fig. 2,
- Fig. 4: eine teilweise räumliche Darstellung des Rahmens nach Fig. 1 und eines Deckels der Abdeckung,

Fig. 5 - 13 das Einsetzen eines Deckels in den Rahmen und das Schliessen der Abdeckung in verschiedenen Phasen, wobei

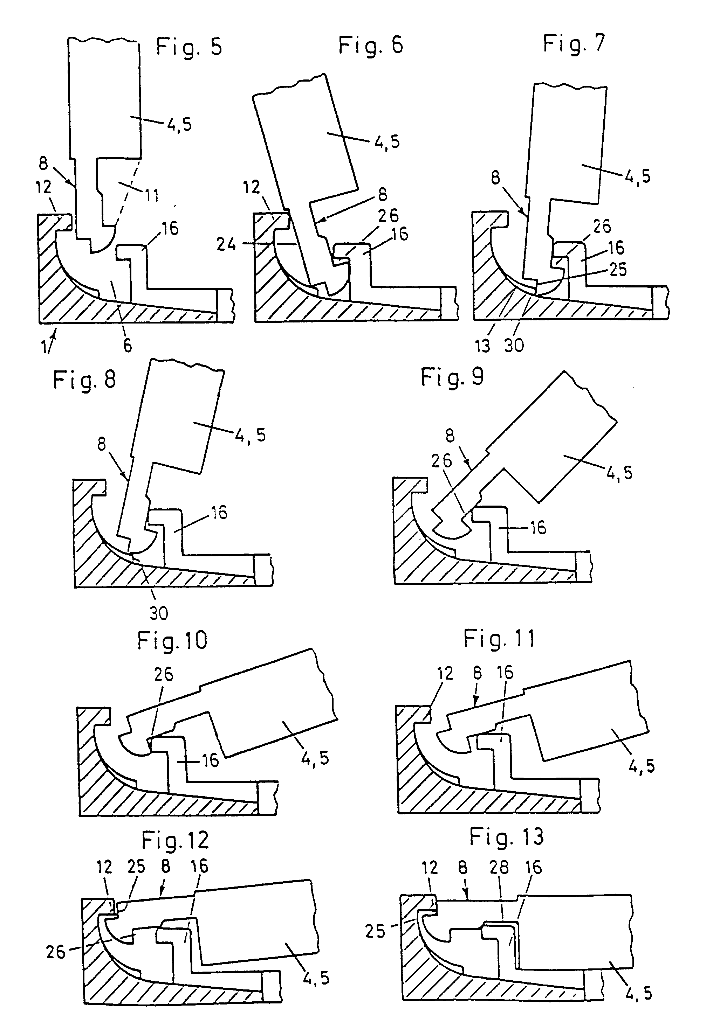

- Fig. 5: den Beginn des Einführens des Deckels,
- Fig. 6: das Anlehnen des geöffneten Deckels am Rand des Rahmens,
- Fig. 7: das Verhindern des Zuklappens des Deckels bei ungewolltem Kippen desselben,
- Fig. 8: den Beginn des Schliessvorgangs durch leichtes Anheben des Deckels,
- Fig. 9-12: den Schliessvorgang bis kurz vor Erreichen der Schliesslage und
- Fig. 13: den Deckel in der verriegelten Schliesslage zeigt.

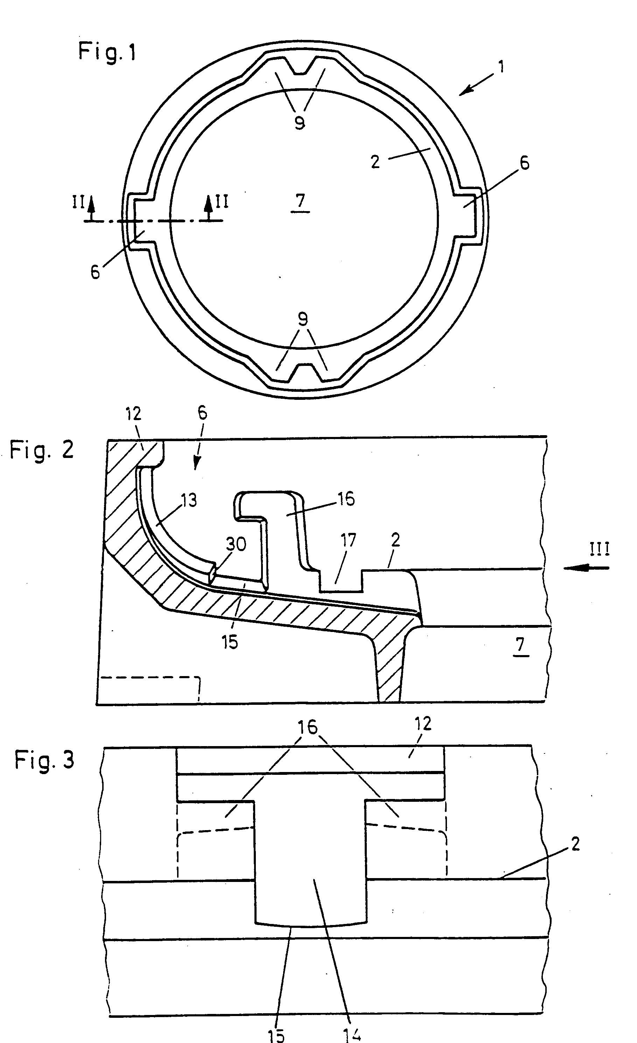

Die in Fig. 1 dargestellte Abdeckung dient als Verschluss für eine im wesentlichen kreisrunde Oeffnung. Unter Oeffnung sind Durchgänge verschiedener Art zu verstehen, z.B. Schachtöffnungen auf Strassen, Plätzen und in Gebäuden, Wasserabläufe, Durchgangsöffnungen in Böden von Gebäuden u.dgl. Diese Abdeckungen können in verschiedenen Böden, z.B. in Asphalt, Beton- oder Naturböden, eingesetzt werden. In Fig. 1 weist die Abdeckung einen kreisrunden Rahmen mit einer Oeffnung 7 auf, auf dessen an der Innenseite angeordneter Auflagefläche 2 ein Deckel 3 (nicht dargestellt), siehe Fig. 4, abgestützt ist, der aus zwei Teildeckeln 4, 5 zusammengesetzt ist. Dementsprechend sind im Rahmen 1 zwei gegenüberliegende Ausnehmungen 6 vorgesehen, in welche sich ein am Teildeckelrand angeformter Haltesteg 8 zur Bildung einer Scharniervorrichtung erstreckt. Im weitern sind mit Abstand von den Ausnehmungen 6 im Rahmen 1 Nischen 9 ausgespart, d.h. je zwei Nischen 9 für einen Teildeckel 4, 5, in die in der Schliesslage des Deckels am Teildeckelrand angeordnete Nocken eingreifen, deren Funktion noch im Detail erläutert wird.

In Fig. 2 ist ein Schnitt durch den Rahmen 1 im Bereich der Ausnehmung 6 dargestellt. Die Ausnehmung 6 wird gegen aussen durch die Rahmenwand mit einem hakenförmigen Abschlussrand 12 begrenzt. Innenseitig bildet die Rahmenwand eine konkav gewölbte Partie 13, in deren Mitte eine Rinne 15 ausgespart ist, die gegen die Oeffnung 7 im Rahmen 1 geneigt ist.

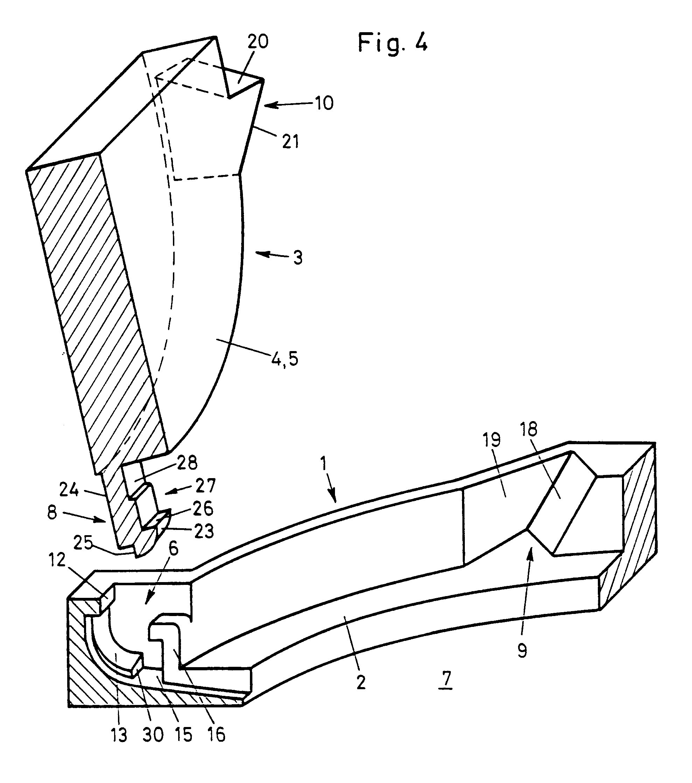

Gegen die Oeffnung 7 hin ist die Ausnehmung 6 durch einen hakenförmigen Steg 16 begrenzt, in dessen Mitte die Rinne 15 verläuft, siehe auch Fig. 3. In der Auflagefläche 2 für den Deckel verläuft eine kreisförmige Rille 17, in die ein Weichdichtungsring (nicht dargestellt) eingelegt werden kann.

Aus Fig. 3 ist der hakenförmige Steg 16 erkennbar, zwischen welchem die Rinne 15 verläuft.

Aus Fig. 4 ist ein vierte] des Rahmens 1 und die Hälfte eines Teildeckels 4, 5 dargestellt. Im Rahmen 1 ist die Ausnehmung 6 mit dem Abschlussrand 12, der Rinne 15 und dem hakenförmigen Steg 16 erkennbar. In der Auflagefläche 2 ist die Rille 17 der Einfachheit halber weggelassen.

Am Rahmen 1 ist weiter die mit Abstand von der Ausnehmung angeordnete Nische 9 erkennbar. Die Nische 9 weist eine gegen die Ausnehmung 6 gerichtete, geneigte Auflagefläche 18 auf, welche die eine Wand der Nische 9 bildet, während die andere Nischenwand 19 in einem vorzugsweise spitzen Winkel zur Auflagefläche verläuft und im Gegensatz zur Auflagefläche 18 nur geringfügig geneigt ist.

Der Teildeckel 4, 5 weist zwei Nocken 10 auf (nur einer dargestellt), die in der Schliesslage der Teildeckel 4, 5 in die entsprechenden Nischen 9 ragen. Der Nocken 10 wird durch eine der Auflagefläche 18 entsprechende Abstützfläche 20 begrenzt, die sich in der Schliesslage an die Auflagefläche 18 der Nische 9 anlegt. Die andere Nockenwand 21 erstreckt sich unmittelbar neben der andern Nischenwand 19.

Der Teildeckel 4, 5 weist einen Haltesteg 8 auf, welcher in besonderer Weise ausgebildet ist. Der Haltesteg 8 weist an seinem freien Ende eine konvex gewölbte Stirnpartie 23 auf, welche auf der Stegoberseite 24 durch einen ersten Rücksprung 25 begrenzt ist, während ein zweiter Rücksprung 26 die konvex gewölbte Stirnpartie an der Stegunterseite 27 begrenzt.

Am Fuss des Haltesteges 8 am Uebergang zum Teildeckelrand weist die Stegunterseite 27 eine zurückspringende Fläche 28 auf. Die zurückspringende Fläche 28 wirkt mit dem hakenförmigen Steg 16 zusammen, wie noch im Detail erläutert wird.

Die Scharnierfunktion des Haltesteges 8 und der Ausnehmung 6 wird anhand der Figuren 5 - 13 erläutert.

In Fig. 5 wird der Haltesteg 8 zwischen dem Abschlussrand 12 und dem hakenförmigen Steg 16 in die Ausnehmung 6 eingeführt. Hierzu kann der Teildeckel 4, 5 in etwa senkrechter Lage gehalten werden.

Fig. 6 zeigt den Teildeckel 4, 5 in seiner Offenstellung. Hierzu liegt der Haltesteg 8 mit seiner Stegoberseite 24 am Abschlussrand 12 an, wobei der Teildeckel 4, 5 schräg nach auswärts geneigt ist und somit eine kippsichere Lage einnimmt. Der hakenförmige Steg 16 verhindert, dass der Teildeckel 4, 5 aus der Ausnehmung 6 kippen kann.

Aber selbst wenn versehentlich der Deckel aus seiner Offenstellung nach Fig. 6 einwärts gekippt wird, siehe Fig. 7, kann der Teildeckel 4, 5 nicht zuklappen, da der erste Rücksprung an eine Schulter 30 stösst, die von der konkav gewölbten Partie 13 auf der Innenseite des Rahmenrandes gebildet wird. Gleichzeitig stösst der zweite Rücksprung 26 am hakenförmigen Steg 16 an und bildet damit einen Anschlag, der das Zuschlagen des Teildeckels 4, 5 zuverlässig verhindert. Soll nun der Teildeckel 4, 5 in seine Schliesslage gebracht werden, muss er leicht angehoben werden, siehe Fig. 8, damit der erste Rücksprung 25 sich aus der Schulter 30 entfernt.

Beim weiteren Absenken des Teildeckels 4, 5, siehe Fig. 9 und 1 0, liegt der Haltesteg mit dem zweiten Rücksprung 26 auf dem hakenförmigen Steg 16.

In Fig. 11 ist der Teildeckel 4, 5 bereits in die Nähe seiner Schliessstellung abgesenkt. Dies ist etwa der Zeitpunkt, bei welchem die Abstützfläche 20 des Nockens 10 auf die Auflagefläche 18 der Nische 9 zu liegen kommt. Fig. 11 zeigt, dass hierbei der Deckelteil 4, 5 zwangsläufig gegen den Halterand 12 geschoben wird.

In Fig. 12 ist der Haltesteg 8 bereits so weit gegen den Halterand 12 verschoben, dass der erste Rücksprung 25 unter dem Abschlussrand 12 liegt. Der zweite Rücksprung 26 stützt sich immer noch auf dem hakenförmigen Steg 16 ab.

Fig. 13 zeigt die Schliessstellung des Teildeckels 4, 5. Der Haltesteg 8 liegt mit seinem ersten Rücksprung 25 am Abschlussrand 12 an, während der hakenförmige Steg 16 in die zurückspringende Fläche 28 des Haltesteges 8 einrastet. Dies wurde dadurch ermöglicht, dass die Abstützfläche 20 des Nockens 10 des Teildeckels 4, 5 sich auf die Auflagefläche 18 der Nische 9 des Rahmens 1 abstützt. Diese ist so angeordnet, dass der Haltesteg 8 gegen den Abschlussrand 12 soweit verschoben wird, dass der hakenförmige Steg 16 in die zurückspringende Fläche 28 des Haltesteges 8 einrastet. Durch das Zusammenwirken der Auflagefläche 18 des Rahmens 1 mit der Abstützfläche 20 des Teildeckels 4, 5 ergibt sich eine spielfreie Lagerung des Teildeckels 4, 5 im Rahmen 1.

Aus Fig. 2 und 3 ist erkennbar, dass der Boden der Rinne 15 und die konkav gewölbte Partie 13 der Ausnehmung 6 eine Querneigung aufweisen, wodurch erreicht wird, dass in die Ausnehmung gelangte Schmutzteile gegen die Rinne 15 verschoben werden, so dass sie aus der Rinne 15 in die Oeffnung 7 gelangen.

Die beschriebene Abdeckung weist den Vorteil lauf, dass sie eine scharnierartige Vorrichtung zum Schwenken des Deckels in seine Oeffnungslage aufweist, wobei aber die Scharnierbewegung ohne Schwenkzapfen gewährleistet ist. Dadurch wird erreicht, dass auf den empfindlichen Schwenkzapfen verzichtet werden kann und zudem der Deckel mit seinem Haltesteg 8 leichter in die Ausnehmung 6 eingesetzt werden kann.

Als Ausführungsbeispiel wurde eine kreisförmige Abdeckung gewählt, bei welcher ein zweiteiliger Deckel vorgesehen ist.

Selbstverständlich kann auch nur ein einteiliger Deckel verwendet werden, wobei dann die Nische 9 und der Nocken 10 gegenüber der Ausnehmung angeordnet wird. Auch kann die Form des Rahmens und des Deckels in beliebiger Weise gewählt werden, z.B. als Dreieck, Viereck, Quadrat oder Polygon. Zudem kann der Rahmen eine andere Form aufweisen als der Deckel, z. B. einen quadratischen Rahmen mit einem runden Deckel.

Die schräggeneigte Auflagefläche 18 gewährleistet eine weitgehend spielfreie Anordnung des Deckels in der Schliesslage, da die Abstützfläche 20 den Deckel in eine in der Ausnehmung 6 vorgesehene Verriegelungslage bringt. Dies wird erreicht ohne dass hierzu ein Scharnierzapfen erforderlich wäre.

Die Beschreibung der in der Zeichnung dargestellten Ausführungsform beschränkt sich auf die Verwendung eines Deckels. Es könnte jedoch der Deckel durch einen Rost ersetzt werden, ohne dass dadurch sich an der schwenkzapfenlosen Verriegelungseinrichtung etwas ändern würde.

Es ist auch möglich, den Deckel oder den Teildeckel zusätzlich zu verriegeln, z.B. an dem dem Haltesteg gegenüberliegenden Deckelrand, siehe hierzu die Patente der Anmelderin (Gesuche 4600/87 vom 26.11.87 BE 21429 und 4777/87 vom 07.12.87 BE 21428).

## Patentansprüche

1. Abdeckung für eine Bodenöffnung (7) mit einem Rahmen (1) und einem die Oeffnung verschliessenden, abnehmbaren Deckel (3) oder Rost, welcher in der Schliesslage auf einer Auflagefläche (2) an der Innenseite des Rahmens (1) aufliegt und welchem ein Haltesteg (8) angeformt ist, der in eine Ausnehmung (6) an der Innenseite des Rahmens (1) einsetzbar ist, mit welcher er einen Teil einer Scharniervorrichtung bildet, mittels welcher der Deckel (3) oder Rost aus der Schliesslage in eine stabile Offenlage schwenkbar ist, wobei der Deckel (3) oder Rost einen mit Abstand vom Haltesteg (8) an seinem Aussenumfang angeordneten Nocken (10) aufweist mit einer zur Deckel- oder Rostebene schräg nach unten verlaufenden Abstützfläche (20), welche in der Schliesslage des Deckels (3) oder Rostes an einer Auflagefläche (18) anliegt, die in einer an der Innenseite des Rahmens (1) ausgesparten Nische (9) zur Aufnahme des Nockens (10) angeordnet ist, **dadurch gekennzeichnet, dass** die Scharniervorrichtung einen hakenförmigen Steg (16) umfasst, welcher die Ausnehmung (6) gegen die Oeffnung (7) abgrenzt und auf welchem der Haltesteg (8) in der Schliesslage aufliegt und welchen er in der Offenlage zur Stabilisierung des Deckels (3) oder Rostes untergreift, während der Haltesteg (8) bei Einnahme der Schliesslage durch den Kontakt der Abstützfläche (20) des Nockens (10) mit der Auflagefläche (18) der Nische (9) so gegen die Ausnehmung (6) geschoben wird, dass er unter einen Vorsprung an derselben greift.

2. Abdeckung nach Anspruch 1, **dadurch gekennzeichnet, dass** der Haltesteg (8) an der Unterseite am Uebergang zur Deckel- oder Rostpartie eine zurückspringende Fläche (28) aufweist, in welche der Steg (16) in der Schliesslage einrastet.

3. Abdeckung nach Anspruch 1, dadurch gekennzeichnet, dass der Haltesteg (8) des Deckels oder Rostes (3) an seinem freien Ende eine konvex gewölbte Stirnpartie (23) aufweist, welche eine auf einer konkav gewölbten Partie (13) der Ausnehmung (6) sich abzustützen bestimmte Gleitfläche bildet.

4. Abdeckung nach Anspruch 3, dadurch gekennzeichnet, dass die konvex gewölbte Stirnpartie (23) des Haltesteges (8) an beiden Enden durch Rücksprünge (25, 26) begrenzt ist, von denen der eine Rücksprung (26) bei ganz geöffnetem Deckel oder Rost (3) mit dem hakenförmigen Steg (16) eine Sicherung des Deckels oder Rostes (3) gegen ungewolltes Umkippen nach auswärts bildet.

5. Abdeckung nach Anspruch 3, dadurch gekennzeichnet, dass die Ausnehmung (6) im Grund eine konkav gewölbte Partie 113) mit einer Schulter (30) aufweist, wobei bei ungewolltem Umkippen des geöffneten Deckels oder Rostes (3) nach einwärts der andere Rücksprung (25) sich an der Schulter (30) abstützt und der eine Rücksprung (26) an dem hakenförmigen Steg (16) anliegt, wodurch der Deckel oder Rost formschlüssig in seiner Offenstellung gehalten wird.

6. Abdeckung nach Anspruch 4, dadurch gekennzeichnet, dass in der Schliesslage des Deckels oder Rostes der andere Rücksprung (25) mit einem an dem Aussenrand der Ausnehmung (6) angeordneten hakenförmigen Abschlussrand (12) zusammenwirkt, derart, dass der andere Rücksprung (25) infolge der zwangsweisen Verschiebung des Deckels oder Rostes (3) durch die schrägverlaufenden Flächen der Abstützfläche (20) des Deckels oder Rostes und der Auflagefläche (18) des Rahmens (1) unter den Abschlussrand (12) der Ausnehmung zu liegen bestimmt ist.

7. Abdeckung nach Anspruch 3 oder 4, dadurch gekennzeichnet, dass der Haltesteg (8) auf seiner Unterseite (27) eine in der Mitte des Haltesteges angeordnete Rippe (11) aufweist.

8. Abdeckung nach Anspruch 5, dadurch gekennzeichnet, dass in der Ausnehmung (6) in der Mitte der konkav gewölbten Partie (13) eine Rinne (15) ausgespart ist, die den hakenförmigen Steg (16) in einem Spalt (14) durchquert, durch welchen sich auch die Rippe (11) erstreckt.

9. Abdeckung nach einem der Ansprüche 1 bis 8, dadurch gekennzeichnet, dass die quer zur Bewegungsrichtung des Deckels oder Rostes (3) beim Uebergang von der Oeffnungslage in die Schliesslage verlaufenden Flächen in der Ausnehmung (6) und am Haltesteg (8), z. B. die konkav gewölbte Stirnpartie (13), die konvex gewölbte Stirnpartie (23) und die Rinne (15), in der Querrichtung eine Neigung aufweisen, zwecks Erleichterung des Wegschaffens von Fremdkörpern in der Ausnehmung (6).

## Claims

1. Covering for a ground opening (7) having a frame (1) and a cover (3) or grid closing the opening and being removable, the cover or grid being supported in the closing position on a contact surface (2) on the inside of the frame (1) and to which there is moulded a holding bar (8) which can be inserted into a recess (6) on the inside of the frame (1), with which recess it forms a part of a hinge device by means of which the cover (3) or grid can be pivoted out of the closing position into a stable open position, whereby the cover (3) or grid has a cam (10) arranged with clearance from the holding bar (8) on its outer circumference with a supporting face (20) extending in a sloping manner downwards to the cover plane or grid plane, the supporting face in the closing position of the cover (3) or grid abutting a contact face (18) which is arranged in a niche (9) hollowed out on the inside of the frame (1) for the incorporation of the cam (10), characterized in that the hinge device comprises a hook-shaped bar (16) which delimits the recess (6) towards the opening (7) and on which the holding bar (8) is supported in the closing position and under which it engages in the open position for the stabilization of the cover (3) or grid, while the holding bar (8) with the occupation of the closing position is pushed by the contact of the supporting face (20) of the cam (10) with the contact face (18) of the niche (9) against the recess (6) in such a way that it engages under a projection on the same.

2. Covering according to claim 1, characterized in that the holding bar (8) has on the underside at the transition to the cover part or grid part a rebounding face (28) into which the bar (16) catches in the closing position.

3. Covering according to claim 1, characterized in that the holding bar (8) of the cover or grid (3) has at its free end a convexly arched front part (23) which forms a sliding face intended to be supported on a concavely arched part (13) of the recess (6).

4. Covering according to claim 3, characterized in that the convexly arched front part (23) of the holding bar (8) is limited at both ends by rebounds (25, 26), of which the one rebound (26) with cover or grid (3) open completely forms with the hook-shaped bar (16) a safety mechanism of the cover or grid (3) against undesirable outward tipping.

5. Covering according to claim 3, characterized in that the recess (6) has in the base a concavely arched part (13) with a shoulder (30), whereby with undesirable inward tipping of the opened cover or grid (3) the other rebound (25) is supported on the shoulder (30) and the one rebound (26) abuts the hook-shaped bar (16), whereby the cover or grid is held in a form-locking manner in its open position.

6. Covering according to claim 4, characterized in that in the closing position of the cover or grid the other rebound (25) cooperates with a hook-shaped sealing edge (12) arranged on the outer edge of the recess (6) in such a way that the other rebound (25), as a consequence of the compulsory displacement of the cover or grid (3) through the obliquely extending faces of the supporting face (20) of the cover or grid and the contact face (18) of the frame (1), is intended to lie under the sealing edge (12) of the recess.

7. Covering according to claim 3 or 4, characterized in that the holding bar (8) has on its underside (27) a fin (11) arranged in the centre of the holding bar.

8. Covering according to claim 5, characterized in that a groove (15) is hollowed out in the recess (6) in the centre of the concavely arched part (13), which groove crosses the hook-shaped bar (16) in a gap (14) through which the fin (11) also extends.

9. Covering according to one of claims 1 to 8, characterized in that the faces in the recess (6) and on the holding bar (8) extending transversely to the direction of movement of the cover or grid (3) at the transition from the opening position into the closing position, for example the concavely arched front part (13), the convexly arched front part (23) and the groove (15), have in the transverse direction an inclination for the purpose of facilitating the removal of foreign bodies in the recess (6).

## Revendications

1. Couverture destinée à une ouverture (7), dans le sol, comportant un cadre (1) et un couvercle (3) ou une grille amovible, fermant l'ouverture, qui, en position de fermeture, repose sur une surface de support (2) contre le côté intérieur du cadre (1) et sur lequel est formée une cloison de maintien (8), qui peut être insérée dans un évidement (6) sur le côté intérieur du cadre (1), avec lequel elle forme une partie d'un dispositif à charnière au moyen duquel le couvercle (3) ou la grille peut pivoter de la position fermée à une position ouverte stable, le couvercle (3) ou la grille présentant une came (10) située à une certaine distance de la cloison de maintien (8), sur son pourtour extérieur, avec une surface d'appui (20) s'étendant vers le bas en oblique par rapport au plan du couvercle ou de la grille, surface qui s'applique, en position fermée du couvercle (3) ou de la grille, contre une surface de support (18) qui est située dans une niche (9), découpée sur le côté intérieur du cadre (1), destinée à recevoir la came (10), caractérisée en ce que le dispositif à charnière comprend une cloison (16) en forme de crochet qui délimite l'évidement (6) vers l'ouverture (7) et sur laquelle repose la cloison de maintien (8) en position fermée et au-dessous de laquelle elle passe en position ouverte pour stabiliser le couvercle (3) ou la grille, tandis que lors de la venue en position de fermeture, la cloison de maintien (8) est poussée par le contact entre la surface d'appui (20) de la came (10) et la surface de support (18) de la niche, contre l'évidement (6), de manière à passer sous une partie saillante de celui-ci.

2. Couverture selon la revendication 1, caractérisée en ce que la cloison de maintien (8) présente, sur la face inférieure, dans la zone de transition vers la partie de couvercle ou de grille, une surface (28) en retrait dans laquelle s'accroche la cloison (16) en position fermée.

3. Couverture selon la revendication 1, caractérisée en ce que la cloison de maintien (8) du couvercle ou de la grille (3) présente, à son extrémité libre, une partie frontale (23) convexe qui forme une surface de glissement déterminée prenant appui sur une partie (13) concave de l'évidement (6).

4. Couverture selon la revendication 3, caractérisée en ce que la partie frontale (23) convexe de la cloison de maintien (8) est limitée aux deux extrémités par des parties en retrait (25, 26) dont une partie en retrait (26) forme, avec la cloison (16) en forme de crochet, un blocage du couvercle ou de la grille (3) contre un basculement involontaire vers l'extérieur, lorsque le couvercle ou la grille (3) est totalement ouvert.

5. Couverture selon la revendication 3, caractérisée en ce que l'évidement (6) présente au fond une partie concave (13) avec un épaulement (30), l'autre partie en retrait (25) prenant appui contre l'épaulement (30) dans le cas d'un basculement involontaire vers l'intérieur du couvercle ou grille (3) ouvert et une partie en retrait (26) s'appliquant contre la cloison (16) en forme de crochet, ce qui fait que le couvercle ou la grille est maintenu par concordance de forme dans sa position ouverte.

6. Couverture selon la revendication 4, caractérisée en ce qu'en position fermée du couvercle ou de la grille, l'autre partie en retrait (25) coopère avec un bord de fermeture (12) en forme de crochet, situé sur le bord extérieur de l'évidement ( 6), de manière que l'autre partie en retrait (25) soit destinée à passer sous le bord de fermeture (12) de l'évidement, par suite du déplacement forcé du couvercle ou de la grille (3), du fait des surfaces obliques de la surface d'appui (20) du couvercle ou de la grille et de la surface de support (18) du cadre (1).

7. Couverture selon la revendication 3 ou 4, caractérisée en ce que la cloison de maintien (8) présente, sur sa face inférieure (27), une nervure (11) située au milieu de la cloison de maintien.

8. Couverture selon la revendication 5, caractérisée en ce qu'il est ménagé dans l'évidement (6), au milieu de la partie concave (13), une rigole (15) qui traverse la cloison (16) en forme de crochet, dans une fente (14) à travers laquelle s'étend aussi la nervure (11).

9. Couverture selon l'une des revendications 1 à 8, caractérisée en ce que les surfaces s'étendant transversalement à la direction de déplacement du couvercle ou de la grille (3), lors du passage de la position ouverte à la position fermée, présentent dans l'évidement (6) et sur la cloison de maintien (8), par exemple la partie frontale concave (13), la partie frontale convexe (23) et la rigole (15), une pente dans la direction transversale, pour faciliter l'élimination des corps étrangers de l'évidement (6).
